# EUROPEAN PATENT SPECIFICATION

(11) **EP 4 082 847 B1**
(45) Date of publication and mention of the grant of the patent: **12.06.2024**
(21) Application number: 22166870.0
(22) Date of filing: 06.04.2022
(51) Int. Cl.: B60T 17/00, F15B 21/044, F16L 55/07, F17C 13/04

(54) **AUTOMATIC DRAIN VALVE FOR PNEUMATIC PLANTS**
AUTOMATISCHES ABLASSVENTIL FÜR PNEUMATISCHE ANLAGEN
VANNE DE VIDANGE AUTOMATIQUE POUR INSTALLATIONS PNEUMATIQUES

(30) Priority: 06.04.2021 IT 202100008420
(43) Date of publication of application: 02.11.2022
(73) Proprietor: Tosi F.lli S.r.l., 13019 Varallo (VC) (IT)
(72) Inventor: TOSI, Andrea, 13019 Varallo Sesia (VC) (IT); CERRI, Marco, 13017 Quarona (VC) (IT)
(74) Representative: Torredimare, Luca

(56) References cited:
- DE-A1- 19 533 990
- DE-U- 1 994 544
- DE-U- 1 998 353
- FR-A- 1 363 011

## Description

The present invention relates, in general, to a drain valve particularly suited for application to pneumatic systems, in particular air tanks, in particular for draining condensation, and the associated pneumatic circuit.

A system is known from patent application EP2774821 which automatically purges contaminants from a pressurized air tank when the emergency brakes of a vehicle are set. In a preferred embodiment, the system comprises a valve comprising an input port, an exhaust port, and a control port. The input port is in fluid connection with a drain on the pressurized air tank, and the control port is in fluid connection with an emergency brake line of the vehicle. When the emergency brakes are engaged, the valve is open such that the input connection and the exhaust connection are in fluid connection operable for air and contaminants from the pressurized air tank to be expelled from the pressurized air tank through the exhaust connection. When the emergency brakes are not engaged, the valve is closed such that the input connection and exhaust connection are not in fluid connection.

Patent application FR1363011 discloses an automatic drain valve for removing oil and condensation products from a compressed-air system. The valve comprises a hollow body having an inlet valve and an outlet valve coupled together in a manner such that when one valve is open the other is closed, and vice versa, wherein biasing means are provided for biasing the valve. There is a coupling system such that in the idle position the inlet valve is open and the outlet valve is closed. There are actuator means for actuating the coupling system against the action of the biasing means in order to close the inlet valve and open the outlet valve, so that the hollow body can be drained; the actuator means are pneumatic. The inlet and outlet valves comprise each a valve head co-operating with an annular seat; the two valve heads carry a single rod, so that the axial positioning of the rod allows reversing the position of the valves. The active surface of the outlet valve is larger than the surface of the inlet valve. The biasing means consist of a spring, and the actuator means comprise a diaphragm bearing set against the end of the valve rod, adapted to move the rod for reversing the position of the valves. There is an air intake under pressure exerted by one side of the diaphragm.

Application US6238013 discloses a contaminant-ejecting valve for a pneumatic brake system. Two embodiments of the valve are disclosed: in one embodiment, the valve is actuated by pilot air pressure, which is either supply air pressure or control air pressure; in another embodiment, the valve is solenoid-actuated. In both embodiments, the valve comprises a housing enclosing a chamber; a control port in the housing in fluid communication with the chamber; an exhaust port in the housing permitting removal of contaminants from the chamber; a main piston mounted at the inlet of the chamber and movable between a first position and a second position; an exhaust passage through the main piston connecting the chamber and the exhaust port in fluid communication; and a blocking member movable between an open and closed position for opening and closing the exhaust passage, such that when the blocking member is in the open position it permits pressurized air from the control port to eject contaminants from the chamber. The main piston includes a hollow stem, and the blocking member comprises an exhaust piston slidably mounted within the hollow stem and movable between an exhaust passage open and an exhaust passage closed position.

Finally, application EP3173302 discloses a valve having an inlet, exhaust, control port, and diaphragm. The diaphragm moves between an open position, in which the inlet and exhaust are in fluid communication, and a closed position, in which the diaphragm blocks fluid from flowing between the inlet and the exhaust. The diaphragm moves from the closed position to the open position when an inlet force due to pressure at the inlet is greater than the sum of the biasing force and a control connection force due to pressure at the control connection. The valve is operable to automatically drain contaminants from a vehicle air reservoir when the vehicle's emergency brakes are set. To reduce noise, the diaphragm of the valve is preferably in tension when in the closed position, and/or the diaphragm opens by a limited distance when in the open position so that a back pressure is generated at the inlet.

The present invention aims at improving the functionality of prior-art valves by providing an automatic drain valve capable of activating itself under a small difference in pressure between a tank and the valve of the same chamber, thus avoiding the risk of contamination that might impair the valve's functionality.

One aspect of the present invention relates to a drain valve having the features set out in the appended claim 1.

Auxiliary features of the present invention are set out in dependent claims, which are an integral part of the present description.

The features and advantages of the present invention will become apparent in light of the different embodiments thereof described in the present patent application and illustrated in the annexed drawings, wherein:
- Figure 1 shows a valve in a sectional view relative to a vertical plane;

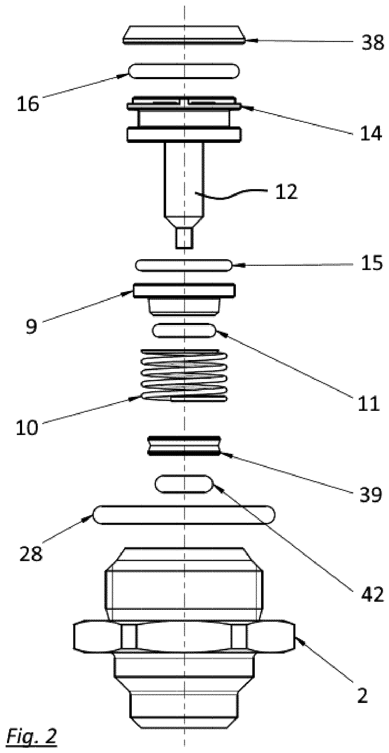

- Figure 2 shows an exploded view of the valve of Figure 1.

With reference to the above-mentioned drawings, a drain valve 1 for tanks of pneumatic systems comprises:
- a valve body 2, defining a cavity, and comprising:
   - an inlet 4, whereupon compressed air contained in the tank is intended to act;
   - an outlet 6, adapted to be in communication with the outside of the tank;
   - a chamber 3 intended to be filled with air coming from inlet 4, and wherein such air is intended to exit chamber 3 through said outlet 6;
- a shutter device comprising:
   - a first piston 8 adapted to slide in said cavity and adapted to selectively close said outlet 6; wherein the first piston 8 is subject to the pressure of the air coming from inlet 4;
   - a second piston 9 adapted to slide in said cavity and subject to the pressure of the air coming from inlet 4;
wherein the first and second pistons 8, 9 are configured to take:
- a closed configuration, in which such pistons 8, 9 prevent air from flowing to and from chamber 3;
- an intake configuration, in which air can flow into chamber 3 from inlet 4, and air is prevented from flowing from chamber 3 through outlet 6;
- an ejection configuration, in which air is prevented from flowing into chamber 3 from inlet 4, and air can flow from chamber 3 through outlet 6.

The first piston 8 is adapted to move as a function of the pressure acting upon it 8 through said inlet 4, and as a function of the pressure in chamber 3.

The second piston 9 is adapted to move as a function of the pressure acting upon it 9 through said inlet 4, and as a function of the pressure in chamber 3.

In particular, with reference to the drawings, the pressurized air in the tank acts upon a top face of pistons 8, 9.

Therefore, the present invention advantageously permits purging valve 1 by just exploiting the pressure variations occurring within the tank. Valve 1 is automatic and mechanical, and therefore simple and economical.

Pistons 8, 9 are adapted to be placed in fluidic communication with the tank through inlet 4. Inlet 4, in particular, always permits such fluidic communication. Therefore, pistons 8, 9 are always subject to the pressure of the air in the tank when valve 1 is mounted to the tank.

Inlet 4 is a portion of valve 1 which can put the pressurized air in the tank in fluidic communication with a part of the first and second pistons 8, 9.

Thus, chamber 3 has a variable volume. In particular, chamber 3 is delimited by valve body 2 and by pistons 8, 9. In particular, chamber 3 is located in the cavity of valve body 2.

The first and second pistons 8, 9 are adapted to sealingly separate said chamber 3 from inlet 4. In the example, the first piston 8 is elongate, in particular comprises a rod 12. In the example, the first piston 8 comprises also a head 14 facing towards inlet 4. Head 14 has an external radial surface sealingly seated against an inner wall of chamber 3 (conveniently via an O-ring 16). Head 14 has a substantially annular shape, and is radially external to rod 12. Rod 12 and head 14 are integral with each other, in particular they are made as one piece. In particular, the second piston 9 is interposed between outlet 6 and head 14.

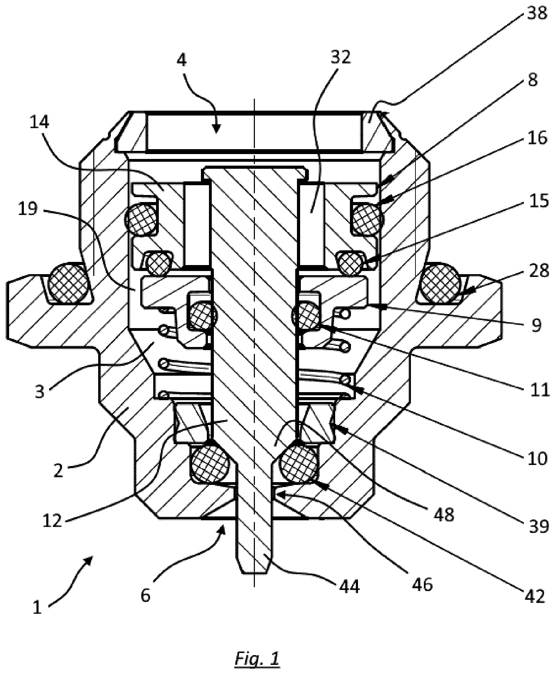

The first piston 8 is adapted to slide along a straight trajectory, which in Fig. 1 is vertical. Rod 12 is coaxial to such sliding axis. The second piston 9 is adapted to slide along a straight trajectory, which in Fig. 1 is vertical. Pistons 8, 9 can slide independently of each other for at least a part of their stroke.

In detail, the second piston 9 is slidably and sealingly mounted to rod 12. In the example, between them 9, 12 there is an O-ring 11. In the example, the second piston 9 has an annular shape and surrounds rod 12. In the illustrated embodiment, the second piston 9 is circular in a section perpendicular to its sliding axis.

In particular, between a radially external surface of the second piston 9 and inner walls of valve body 2 there is a gap 19 through which air can pass. Therefore, when air is allowed to pass between pistons 8, 9, i.e. in the intake configuration, air can flow into chamber 3 from inlet 4.

The first piston 8 comprises passages 32 that allow the air coming from inlet 4 to reach the second piston 9. Passages 32 may include a channel, an aperture, or the like. Therefore, from inlet 4 the air can always act upon at least a portion of both pistons 8, 9. Passages 32 shown in the example are radially external to rod 12, being in particular radially interposed between rod 12 and head 14.

In the closed configuration (Fig. 1), pistons 8, 9 prevent air from flowing from inlet 4 to chamber 3, and from chamber 3 through outlet 6. In this closed configuration, pistons 8, 9 take a mutual position that prevents air from flowing into chamber 3 from inlet 4.

Pistons 8, 9 are adapted to take a closed position (as shown in Fig. 1), in which they 8, 9 are in abutment with each other and prevent air from flowing between inlet 4 and chamber 3, and an open position, in which they are spaced apart and permit such air flow. In particular, in these two positions a surface of head 14 and a surface of the second piston 9 are, respectively, in contact with and separate from each other. Conveniently, either one of the two pistons 8, 9 has an O-ring 15 adapted to abut on the other piston 9, 8 to ensure fluid tightness. With reference to Figure 1, in this condition the air coming from the tank flows through inlet 4, acts upon the first piston 8, flows through the passages, and arrives at a portion of the second piston 9 (in the example, an upper portion). Air flow is prevented between the external lateral surface of head 14 and the inner wall of chamber 3, between pistons 8 and 9, and between the second piston 9 and rod 12; therefore, the air cannot reach the inside of chamber 3. On the contrary, when pistons 8, 9 are spaced apart (vertically in the example), air can flow from inlet 4 to chamber 3. The air flows through passages 32 and gap 19, which are in communication with each other when pistons 8, 9 are apart.

The first piston 8 is adapted to take a first position, in which it allows air to flow through outlet 6, and a second position, in which it obstructs outlet 6 (Fig. 1).

In particular, there is a return means 10, preferably an elastic means like a spring, which is adapted to push one piston 9 against the other 8, in particular the second piston 9 against the first piston 8. Thus, return means 10 tends to bring pistons 8, 9 into the closed position. In the example shown herein, return means 10 is disposed around rod 12. In particular, the second piston 9 is interposed between return means 10 and the first piston 8. In the example, return means 10 has one end resting on the second piston 9, and the other end resting on an inner wall of chamber 3 of body 2, in particular near outlet 6. In the example, return means 10 tends to expand the inner volume of chamber 3. In particular, return means 10 tends to move the second piston 9 towards inlet 4. Return means 10 tends to move the second piston 9 in a manner such that the second piston 9, as it moves, will displace the first piston 8 towards a position in which the first piston 8 will clear outlet 6, thereby allowing air to flow through outlet 6.

Thus, in the closed configuration (Fig. 1) pistons 8, 9 are in the closed position, and the first piston 8 prevents air from flowing from chamber 3 through outlet 6. In such closed configuration, the first piston 8 obstructs outlet 6.

In the intake configuration, pistons 8, 9 are in the open position, and the first piston 8 obstructs outlet 6. Therefore, pistons 8, 9 are spaced apart.

In the ejection configuration, pistons 8, 9 are in the closed position, and the first piston 8 clears outlet 6. Therefore, pistons 8, 9 are in abutment with each other.

In particular, valve body 2 is made as one piece. As an alternative, it 2 comprises: a first portion and a second portion removably assembled together, conveniently by means of a threaded connection. In the example, there is an O-ring 28, mounted to the outer surface of valve body 2, for sealing valve body 2 when mounted to the tank. For example, valve body 2 has an outer thread for mounting it to the tank. Conveniently, valve 1 is mounted to the bottom of the tank, so that air and condensation will be directed towards valve 1, which will drain such air and condensation through outlet 6. Therefore, inlet 4 is located in the tank and is subject to the action of pressurized air, while outlet 6 is in contact with the outside environment. The pressure of the air in the tank is generally higher than the ambient pressure. For example, the tank or the pneumatic system comprises compressor means for generating pressurized air in the tank. The O-rings shown in the illustrated example may be replaced with other *per se* known gaskets.

In the example, the cavity of valve body 2, particularly chamber 3, has a substantially circular cross-section. Valve 1 is substantially cylindrical also on the outside.

Optionally, valve body 2 comprises, in particular on its outer surface, an air filter located at inlet 4 and/or at outlet 6.

In accordance with the particular embodiment illustrated herein, a locking ring 38 is mounted to valve body 2 at inlet 4 for holding the components in position in valve body 2. Locking ring 38 always permits the air flow to and from inlet 4.

Conveniently, there is a stopper 39, in particular a circular one, around the first piston 8 (more in detail, rod 12) in proximity to outlet 6.

Preferably, one end of the first piston 8 facing towards outlet 6 comprises a tapered tip 44. Tip 44 is an end of rod 12. Such tip 44, which preferably has a circular cross-section, has a smaller diameter than a central part and/or an adjacent part of said first piston 8, in particular rod 12. Thus, tip 44 and the head 14 are two opposite ends of the first piston 8. Tip 44 is configured to fit into a seat 46 of valve body 2 in order to selectively close outlet 6. In the example, seat 46 is a cylindrical cavity. In the example illustrated herein, tip 44 is connected to a wider portion by means of a shoulder 48 configured to abut on a supporting portion of valve body 2 for closing outlet 6. In the example, shoulder 48 is adapted to rest on a gasket 42, in particular an O-ring, provided in valve body 2. Gasket 42 improves the sealing of outlet 6.

In the ejection configuration, shoulder 48 is raised from the supporting portion of valve body 2; in the example it 48 is spaced apart from gasket 42, thus creating a passage allowing the air flow from chamber 3 towards outlet 6.

With reference to a plane perpendicular to the sliding axis of pistons 8, 9, the surface of the first piston 8 exposed to the pressure of the air coming from inlet 4 is larger than that of the second piston 9.

The following will describe the operation of valve 1. Starting from an initial condition in which a substantially equal pressure (e.g. a pressure equal to atmospheric pressure) is acting upon both inlet 4 and outlet 6, outlet 6 is open and therefore chamber 3 is in fluidic communication with the outside environment under the action of return means 10, which is pushing the first piston 8 towards a position (upwards in Fig. 1) in which it opens outlet 6. A pressure increase then occurs in the tank and through inlet 4, and such pressure pushes the first piston 8 against the second piston 9 (downwards in Fig. 1), resulting in the closed position; as it moves, the first piston 8 also obstructs outlet 6 - the valve is now in the closed condition. The pressure in the tank then further increases and moves pistons 8, 9 (downwards in Fig. 1), thus reducing the volume of chamber 3, in which the pressure increases. The first piston 8 reaches the end of its stroke towards outlet 6 and then stops. In the tank the pressure continues to increase and moves only the second piston 9 (downwards in Fig. 1), overcoming the resistance of return means 10; in this situation, pistons 8, 9 are spaced apart, so that pressurized air can enter chamber 3, in which a pressure increase occurs - the valve is now in the intake condition. When pressurized air has entered chamber 3, the second piston 9 returns in abutment with the first piston 8 (closed position) under the action of return means 10. The pressure in chamber 3 is now slightly lower than that in the tank. Subsequently, a pressure drop occurs in the tank, which may be followed by formation of condensation. At this point, the volume of chamber 3 increases and pistons 8, 9 move (upwards in Fig. 1) mainly because of the pressure in chamber 3, which is higher than that in the tank, until the first piston 8 clears outlet 6, so that part of the air in chamber 3 will be ejected through outlet 6 into the outside environment - the valve is now in the ejection condition. In this phase, any condensation that may have formed in the tank and entered chamber 3 will also, advantageously, be drained. After ejection, the pressure in chamber 3 will decrease and the pressure at inlet 4 will move pistons 8, 9 towards outlet 6, returning to the closed configuration.

When the first piston 8 has arrived at the end of its stroke towards outlet 6, the second piston 9 can still move along a part of its stroke towards outlet 6.

It is thus possible to supply pressurized air into chamber 3 to effectively eject any condensation from the tank (and from valve 1 itself). Condensation may form for several reasons, which are *per se* known. Advantageously, no electric/electronic systems are necessary to operate valve 1, which works exclusively by exploiting the air pressure variations occurring inside the tank.

Optionally, valve 1 is at least partially made of plastic materials. Thanks to the low weight of plastic materials, low pressures are sufficient to move the components inside the valve, and the valve can thus be opened and closed by means of small pressure differences. For example, pistons 8, 9 are made of polymeric material. Valve body 2 may be made of metal. As an alternative, pistons 8, 9 may be made of metal. O-rings or gaskets are preferably made of polymeric material.

The present invention makes it possible to economically create a compact purge valve which is both reliable and durable.

The present invention further relates to a pneumatic tank or system comprising a valve 1 according to the invention. Conveniently, valve 1, the tank or the system belong to a vehicle, in particular for motor transport, such as an industrial vehicle, a truck, a bus, a trailer.

### REFERENCE NUMERALS

| | |
|---|---|
| Valve | 1 |
| Valve body | 2 |
| Chamber | 3 |
| Inlet | 4 |
| Outlet | 6 |
| First piston | 8 |
| Second piston | 9 |
| Return means | 10 |
| Rod | 12 |
| Head | 14 |
| Gap | 19 |
| O-ring | 11, 15, 16, 28 |
| Channel | 32 |
| Locking ring | 38 |
| Stopper | 39 |
| Gasket | 42 |
| Tip | 44 |
| Seat | 46 |
| Shoulder | 48 |

## Claims

1. Drain valve (1) for tanks of pneumatic systems, comprising:
- a valve body (2), defining a cavity, and comprising:
- an inlet (4), whereupon compressed air contained in the tank is intended to act;
- an outlet (6), adapted to be in communication with the outside of the tank;
- a chamber (3) intended to be filled with air coming from the inlet (4), and wherein such air is intended to exit the chamber (3) through said outlet (6);
- a shutter device comprising:
- a first piston (8) adapted to slide in said cavity and adapted to selectively close said outlet (6); wherein the first piston (8) is subject to the pressure of the air coming from the inlet (4);
- a second piston (9) adapted to slide in said cavity and subject to the pressure of the air coming from the inlet (4) ;
wherein the first and second pistons (8, 9) are configured to take:
- a closed configuration, in which such pistons (8, 9) prevent air from flowing to and from the chamber (3);
- an intake configuration, in which air can flow into the chamber (3) from the inlet (4), and air is prevented from flowing from the chamber (3) through the outlet (6);
- an ejection configuration, in which air is prevented from flowing into the chamber (3) from the inlet (4), and air can flow from the chamber (3) through the outlet (6);
**characterized in that** the pistons (8, 9) are adapted to take a closed position, in which they (8, 9) are in abutment with each other and prevent air from flowing between the inlet (4) and the chamber (3), and an open position, in which they (8, 9) are spaced apart and permit such air flow.

2. Valve according to claim 1, comprising a return means (10) adapted to push one piston (9) against the other (8).

3. Valve according to any one of the preceding claims, wherein one end of the first piston (8) facing towards the outlet (6) comprises a tapered tip (44) configured to fit into a seat (46) of the valve body (2) for selectively closing the outlet (6).

4. Valve according to claim 2 or 3, wherein the return means (10) is adapted to move the second piston (9) so that said second piston (9), as it moves, will displace the first piston (8) towards a position in which such first piston (8) will clear the outlet (6), thereby allowing air to flow through the outlet (6).

5. Valve according to any one of the preceding claims, wherein the first piston (8) comprises passages (32) that allow the air coming from the inlet (4) to reach the second piston (9).

6. Valve according to claim 5, wherein between a radially outer surface of the second piston (9) and inner walls of the valve body (2) there is a gap (19) through which air can pass.

7. Valve according to any one of the preceding claims, wherein the first piston (8) comprises a rod (12) and a head (14) facing towards the inlet (4); wherein the second piston (9) is interposed between the outlet (6) and the head (14).

8. Valve according to any one of the preceding claims, wherein, in the closed configuration, the pistons (8, 9) are in the closed position, and the first piston (8) prevents air from flowing from the chamber (3) through the outlet (6); in the intake configuration, the pistons (8, 9) are in the open position, and the first piston (8) obstructs the outlet (6).

9. Pneumatic tank or system comprising a valve (1) according to any one of the preceding claims. /LT

## Patentansprüche

1. Ablassventil (1) für Tanks von pneumatischen Systemen, aufweisend:
- einen Ventilkörper (2), der einen Hohlraum definiert und Folgendes umfasst:
- einen Einlass (4), auf den die im Tank enthaltene Druckluft einwirken soll;
- einen Auslass (6), dazu ausgeführt ist, mit der Außenseite des Tanks in Verbindung zu stehen;
- eine Kammer (3), die dazu bestimmt ist, mit Luft gefüllt zu werden, die von dem Einlass (4) kommt, und wobei diese Luft dazu bestimmt ist, die Kammer (3) durch den Auslass (6) zu verlassen;
- eine Verschlussvorrichtung aufweist:
- einen ersten Kolben (8) dazu ausgeführt, in dem genannten Hohlraum zu gleiten und den Auslass (6) selektiv zu schließen; wobei der erste Kolben (8) dem Druck der vom Einlass (4) kommenden Luft ausgesetzt ist;
- einen zweiten Kolben (9) dazu ausgeführt, in dem genannten Hohlraum zu gleiten und dem Druck der vom Einlass (4) kommenden Luft ausgesetzt;
wobei der erste und der zweite Kolben (8, 9) so konfiguriert sind, dass sie folgendes einnehmen:
- eine geschlossene Konfiguration, in der diese Kolben (8, 9) verhindern, dass Luft in die und aus der Kammer (3) strömt;
- eine Einlasskonfiguration, bei der Luft vom Einlass (4) in die Kammer (3) strömen kann und verhindert wird, dass Luft durch den Auslass (6) aus der Kammer (3) strömt;
- eine Ausstoßkonfiguration, bei der verhindert wird, dass Luft vom Einlass (4) in die Kammer (3) strömt, und Luft aus der Kammer (3) durch den Auslass (6) strömen kann;
**dadurch gekennzeichnet, dass** die Kolben (8, 9) dazu ausgeführt sind, dass sie eine geschlossene Position, in der sie (8, 9) aneinander anliegen und den Luftstrom zwischen dem Einlass (4) und der Kammer (3) verhindern, und eine offene Position, in der sie (8, 9) voneinander beabstandet sind und einen solchen Luftstrom ermöglichen, einzunehmen.

2. Ventil nach Anspruch 1, mit einer Rückstelleinrichtung (10) dazu ausgeführt ist, einen Kolben (9) gegen den anderen (8) zu drücken.

3. Ventil nach einem der vorhergehenden Ansprüche, wobei ein Ende des ersten Kolbens (8), das dem Auslass (6) zugewandt ist, eine verjüngte Spitze (44) aufweist, die derart eingerichtet ist, dass sie in einen Sitz (46) des Ventilkörpers (2) passt, um den Auslass (6) selektiv zu schließen.

4. Ventil nach Anspruch 2 oder 3, wobei die Rückstelleinrichtung (10) dazu ausgeführt ist, dass sie den zweiten Kolben (9) derart zu bewegen, dass der zweite Kolben (9) bei seiner Bewegung den ersten Kolben (8) in eine Position verschiebt, in der der erste Kolben (8) den Auslass (6) freigibt, wodurch Luft durch den Auslass (6) strömen kann.

5. Ventil nach einem der vorhergehenden Ansprüche, wobei der erste Kolben (8) Durchgänge (32) aufweist, die es der vom Einlass (4) kommenden Luft ermöglichen, den zweiten Kolben (9) zu erreichen.

6. Ventil nach Anspruch 5, wobei zwischen einer radial äußeren Fläche des zweiten Kolbens (9) und Innenwänden des Ventilkörpers (2) ein Spalt (19) vorhanden ist, durch den Luft hindurchtreten kann.

7. Ventil nach einem der vorhergehenden Ansprüche, wobei der erste Kolben (8) eine Stange (12) und einen Kopf (14) aufweist, der dem Einlass (4) zugewandt ist; wobei der zweite Kolben (9) zwischen dem Auslass (6) und dem Kopf (14) angeordnet ist.

8. Ventil nach einem der vorhergehenden Ansprüche, wobei in der geschlossenen Konfiguration die Kolben (8, 9) in der geschlossenen Position sind und der erste Kolben (8) verhindert, dass Luft aus der Kammer (3) durch den Auslass (6) strömt; in der Einlasskonfiguration sind die Kolben (8, 9) in der offenen Position, und der erste Kolben (8) versperrt den Auslass (6).

9. Pneumatischer Tank oder System mit einem Ventil (1) nach einem der vorhergehenden Ansprüche.

## Revendications

1. Vanne de vidange (1) pour réservoirs de systèmes pneumatiques, comprenant :
un corps de vanne (2), définissant une cavité, et comprenant :
une entrée (4), sur laquelle de l'air comprimé contenu dans le réservoir est destiné à agir ;
une sortie (6), adaptée pour être en communication avec l'extérieur du réservoir ;
une chambre (3) destinée à être remplie d'air provenant de l'entrée (4), et dans laquelle cet air est destiné à sortir de la chambre (3) par ladite sortie (6) ;
un dispositif obturateur comprenant :
un premier piston (8) adapté pour coulisser dans ladite cavité et adapté pour fermer sélectivement ladite sortie (6) ; dans laquelle le premier piston (8) est soumis à la pression de l'air provenant de l'entrée (4) ;
un second piston (9) adapté pour coulisser dans ladite cavité et soumis à la pression de l'air provenant de l'entrée (4) ;
dans laquelle les premier et second pistons (8, 9) sont configurés pour prendre :
une configuration fermée, dans laquelle de tels pistons (8, 9) empêchent de l'air de s'écouler vers et depuis la chambre (3) ;
une configuration ouverte, dans laquelle de l'air peut s'écouler dans la chambre (3) depuis l'entrée (4), et de l'aire ne peut pas s'écouler à partir de la chambre (3) par la sortie (6) ;
une configuration d'éjection, dans laquelle de l'air ne peut pas s'écouler jusque dans la chambre (3) depuis l'entrée (4), et de l'air peut s'écouler à partir de la chambre (3) par la sortie (6) ;
**caractérisée en ce que** les pistons (8, 9) sont adaptés pour prendre une position fermée, dans laquelle ils (8, 9) sont en butée l'un contre l'autre et empêchent l'air de s'écouler entre l'entrée (4) et la chambre (3), et une position ouverte, dans laquelle ils (8, 9) sont espacés et permettent un tel écoulement d'air.

2. Vanne selon la revendication 1, comprenant des moyens de rappel (10) adaptés pour pousser un piston (9) contre l'autre (8).

3. Vanne selon l'une quelconque des revendications précédentes, dans laquelle une extrémité du premier piston (8) tournée vers la sortie (6) comprend une pointe conique (44) configurée pour s'adapter dans un siège (46) du corps de vanne (2) afin de fermer sélectivement la sortie (6).

4. Vanne selon la revendication 2 ou 3, dans laquelle les moyen de rappel (10) sont adaptés pour déplacer le second piston (9) de sorte que ledit second piston (9), lorsqu'il se déplace, déplace le premier piston (8) vers une position dans laquelle ce premier piston (8) libère la sortie par la sortie (6), en permettant ainsi à de l'air de s'écouler par la sortie (6).

5. Vanne selon l'une quelconque des revendications précédentes, dans laquelle le premier piston (8) comprend des passages (32) qui permettent à de l'air provenant de l'entrée (4) d'atteindre le second piston (9).

6. Vanne selon la revendication 5, dans laquelle entre une surface radialement extérieure du second piston (9) et des parois intérieures du corps de vanne (2) se trouve un espace (19) à travers lequel de l'air peut passer.

7. Vanne selon l'une quelconque des revendications précédentes, dans laquelle le premier piston (8) comprend une tige (12) et une tête (14) tournée vers l'entrée (4) ; dans laquelle le second piston (9) est interposé entre la sortie (6) et la tête (14).

8. Vanne selon l'une quelconque des revendications précédentes, dans laquelle, dans la configuration fermée, les pistons (8, 9) sont dans la position fermée, et le premier piston (8) empêche l'air de s'écouler à partir de la chambre (3) par la sortie (6) ; dans la configuration ouverte, les pistons (8, 9) sont dans la position ouverte, et le premier piston (8) obstrue la sortie (6).

9. Réservoir pneumatique ou système comprenant une vanne (1) selon l'une quelconque des revendications précédentes.
